# EUROPÄISCHE PATENTSCHRIFT

(11) **EP 3 092 135 B1**
(45) Veröffentlichungstag und Bekanntmachung des Hinweises auf die Patenterteilung: **03.05.2023**
(21) Anmeldenummer: 14816169.8
(22) Anmeldetag: 10.12.2014
(51) Int. Cl.: B60B 17/00, B60B 3/00, F16D 65/12

(54) **SCHIENENRAD UND VERFAHREN ZUR ANPASSUNG EINES SCHIENENRADES AN UNTERSCHIEDLICHE BAUFORMEN VON RADBREMSSCHEIBEN**
RAIL VEHICLE WHEEL, AND METHOD FOR ADAPTING A RAIL VEHICLE WHEEL TO DIFFERENT WHEEL BRAKE DISK DESIGNS
ROUE FERROVIAIRE, ET PROCÉDÉ PERMETTANT D'ADAPTER UNE ROUE FERROVIAIRE À DES FORMES DE CONSTRUCTION DIFFÉRENTES DE DISQUES DE FREIN DE ROUE

(30) Priorität: 09.01.2014 AT 500122014
(43) Veröffentlichungstag der Anmeldung: 16.11.2016
(73) Patentinhaber: Siemens Mobility Austria GmbH, 1210 Wien (AT)
(72) Erfinder: ZENZ, Rüdiger, 8020 Graz (AT); BEICHTBUCHNER, Alexander, 8020 Graz (AT); GUTSCHI, Daniela, 8020 Graz (AT); SLOUP, Jiri, 8072 Fernitz (AT)
(74) Vertreter: Siemens Patent Attorneys
(86) Internationale Anmeldenummer: PCT/EP2014/077126
(87) Internationale Veröffentlichungsnummer: WO 2015/104121

(56) Entgegenhaltungen:
- EP-A2- 0 788 896
- EP-A2- 0 788 896
- DE-A1-102011 121 785
- DE-A1-102011 121 785
- FR-A1- 2 836 091
- FR-A1- 2 836 091

## Beschreibung

### Technisches Gebiet

Die Erfindung betrifft ein Schienenradsystem mit einer Vielzahl von über den Radumfang verteilten, am Radsteg vorgesehenen Befestigungslöchern (in der Regel Löcher mit kreisrundem Querschnitt, etwa Bohrungen) zur Befestigung von Radbremsscheiben mit einer vorgegebenen Verteilung von korrespondierenden Befestigungslöchern, wobei am Radsteg Befestigungslöcher für zumindest zwei unterschiedliche Bauformen von Radbremsscheiben vorgesehen sind. Auch wird ein Verfahren zur Anpassung eines Schienenradsystems an unterschiedliche Bauformen von Radbremsscheiben gezeigt.

Eine Radbremsscheibe ist in der Regel durch eine Vielzahl von über den Radumfang verteilten Befestigungsmitteln am Radkörper eines Schienenrads befestigt und liegt in diesem Befestigungsbereich am Radkörper, genauer am Radsteg, an.

Dabei kann lediglich eine Radbremsscheibe auf einer Seite des Schienenrades vorgesehen sein, oder es können zwei Radbremsscheiben vorgesehen sein, auf jeder Seite des Rades eine, wobei dann beide Radbremsscheiben die gleichen Befestigungslöcher benutzen können. Denkbar sind auch mehrere konzentrische Radbremsscheiben auf einer oder auf beiden Seiten des Rades.

Das Rad ist bei Schienenfahrzeugen meist als Vollrad, nämlich als Scheibenrad, ausgebildet. Die Erfindung ist aber nicht auf Vollräder beschränkt. Ein Schienenrad umfasst den Radkranz (mit dem Spurkranz) sowie den Radkörper. Der Radkörper wiederum umfasst den Radsteg und die Radnabe.

### Neuer Stand der Technik

In Schienenfahrzeugen kommen in der Regel mehrere Bremssysteme zur Anwendung, eine Bremssteuerung koordiniert das Zusammenspiel aller Bremssysteme. Das wichtigste Bremssystem ist dabei die Reibungsbremse. Diese wandelt die kinetische Energie eines Schienenfahrzeugs über zwei Reibpartner in Wärme um. Die Reibpartner bei Hochgeschwindigkeitszügen etwa sind Bremsscheiben aus Stahl und Bremsbeläge aus Sintermetall.

Die Bremsscheiben werden dabei als Radbremsscheiben an den Rädern ausgeführt. Das Bremsmoment wird von der Radbremsscheibe über eine kraftschlüssige Verbindung, meist eine Schraubverbindung, und/oder über eine formschlüssige Verbindung auf das Rad übertragen.

Die Anbindung der Radbremsscheibe an das Rad und die Art, wie das Bremsmoment von der Radbremsscheibe auf das Schienenrad übertragen wird, sind vom Hersteller der Radbremsscheibe abhängig. Bereits in der Projektierung eines Schienenfahrzeugs muss entschieden werden, welche Schnittstelle (also etwa, wie viele, wie große, mit welcher Anorndnung Befestigungslöcher vorgesehen werden) zwischen Schienenrad und Radbremsscheibe ausgeführt wird. Dies bedeutet in der Regel die Festlegung auf eine bestimmte Ausführung der Radbremsscheiben bzw. auf einen bestimmten Hersteller.

Da Radbremsscheiben jedoch Verschleißteile sind, besteht von Seiten der Bahnbetreiber der Wunsch, nicht auf eine bestimmte Bauform von Radbremsscheiben festgelegt zu sein, sondern als Ersatzteile Radbremsscheiben mit unterschiedlicher Bauform bzw. von verschiedenen Herstellern verwenden zu können.

Mit einer bestimmten Anordnung von Befestigungslöchern in einem Radsteg zur Befestigung von einer oder zwei Radbremsscheiben mittels Verschrauben können eben nur solche Radbremsscheiben mit korrespondierenden Befestigungslöchern verwendet werden. In der Regel unterscheiden sich jedoch Radbremsscheiben verschiedener Hersteller meist in der Anzahl der Befestigungslöcher und/oder deren Durchmesser.

Die DE 10 2011 121785 A1 offenbart eine Radscheibe für ein Schienenfahrzeug, wobei ein Übergang zwischen einem Radsteg und einer Radnabe bzw. zwischen dem Radsteg und einem Radkranz geometrisch entsprechend einer Tangensfunktion ausgebildet ist. Auf der Radscheibe sind Bohrungen angeordnet, über welche beispielsweise eine Radbremsscheibe oder ein Schallabsorber mit der Radscheibe verbunden werden kann.

### Darstellung der Erfindung

Es ist daher eine Aufgabe der vorliegenden Erfindung, ein Schienenradsystem zur Verfügung zu stellen, an welchem verschiedene Radbremsscheiben, die sich in der Anzahl und/oder im Durchmesser der Befestigungslöcher unterscheiden, angebracht werden können.

Diese Aufgabe wird durch ein Schienenradsystem mit den Merkmalen des Patentanspruchs 1 gelöst. Vorteilhafte Ausgestaltungen der Erfindung sind in den jeweiligen abhängigen Ansprüchen definiert.

Dabei sind erfindungsgemäß am Radsteg Befestigungslöcher für zumindest zwei unterschiedliche Bauformen von Radbremsscheiben vorgesehen.

Somit kann wahlweise eine von mehreren Bauformen von Radbremsscheiben an einem Schienenrad befestigt werden.

In der Regel werden die Befestigungslöcher für verschiedene Bauformen einen gleichen oder ähnlichen Abstand zur Radachse haben. Damit kann man für unterschiedliche Bauformen oft zumindest ein Befestigungsloch fertigen, das für mehrere unterschiedliche Bauformen verwendet werden kann. Es gibt dann eine erste Gruppe von Befestigungslöchern, die für zumindest zwei unterschiedliche Bauformen von Radbremsscheiben verwendbar ist und eine zweite Gruppe von Befestigungslöchern, die nur für eine Bauform einer Radbremsscheibe verwendbar ist.

Wenn sich die verschiedenen Bauformen der Radbremsscheiben stark voneinander unterscheiden, kann es sein, dass eine dritte Gruppe von Befestigungslöchern vorgesehen ist, die nur für eine weitere Bauform einer Radbremsscheibe verwendbar ist.

Oft liegen die Befestigungslöcher für eine Radbremsschreibe auf einem Kreis mit Zentrum in der Radachse, wobei der Kreis für verschiedene Bauformen gleichen oder sehr ähnlichen Umfang aufweist. Insofern kann vorgesehen sein, dass die Befestigungslöcher am Radsteg für unterschiedliche Bauformen von Radbremsscheiben zumindest eine unterschiedliche Verteilung in Umfangsrichtung aufweisen. Die Verteilung in radialer Richtung kann also auch gleich sein.

Oft unterscheiden sich die Befestigungslöcher unterschiedlicher Bauformen von Radbremsscheiben auch in ihrem Durchmesser, gleichen sich aber in ihrer räumlichen Anordnung zueinander. In diesem Fall kann vorgesehen sein, dass die erste Gruppe von Befestigungslöchern für Bauformen von Radbremsscheiben mit unterschiedlichen Durchmessern der Befestigungslöcher verwendbar ist, indem bei einer notwendigen Verringerung des Innendurchmessers der Befestigungslöcher der ersten Gruppe Spannbuchsen in die Befestigungslöcher des Radstegs eingesetzt sind.

Wenn am erfindungsgemäßen Schienenradsystem die erforderliche(n) Radbremsscheibe(n) montiert sind, bleibt es in den meisten Fällen dennoch als solches erkennbar, weil im Gegensatz zu herkömmlichen Schienenrädern nicht immer alle Befestigungslöcher am Radsteg in Verwendung sind. Ein erfindungsgemäßes Schienenradsystem, an welchem mittels Befestigungsmitteln, die in die Befestigungslöcher des Schienenrads eingreifen, zumindest eine Radbremsscheibe befestigt ist, kann sich dadurch auszeichnen, dass ein oder mehrere am Radsteg des Schienenrades vorgesehene Befestigungslöcher frei von Befestigungsmitteln sind. Dies ist nur dann nicht der Fall, wenn sich die verschiedenen Bauformen der Radbremsscheiben nur in der Anzahl, aber nicht in der Lage der Befestigungslöcher unterscheiden und jene Radbremsscheibe(n) mit der größeren Anzahl von Befestigungslöchern montiert sind.

In der Regel werden die Befestigungsmittel Schrauben sein, die etwa entlang eines Kreises mit Zentrum in der Radachse angeordnet sind, was den Vorteil hat, dass die Verbindung gelöst werden kann.

Das erfindungsgemäße Verfahren zur Anpassung eines erfindungsgemäßen Schienenradsystems an unterschiedliche Bauformen von Radbremsscheiben sieht vor, dass am Radsteg Befestigungslöcher für zumindest zwei unterschiedliche Bauformen von Radbremsscheiben gefertigt werden.

Im Falle eines gleichen oder ähnlichen Abstands der Befestigungslöcher zur Radachse kann vorgesehen sein, dass die gegenseitige räumliche Anordnung einer ersten Gruppe von Befestigungslöchern der räumlichen Anordnung von Befestigungslöchern auf zumindest zwei unterschiedlichen Bauformen von Radbremsscheiben entspricht und eine zweite Gruppe von Befestigungslöchern nur der räumlichen Anordnung von Befestigungslöchern für eine Bauform einer Radbremsscheibe entspricht.

Wenn die Befestigungslöcher der verwendeten Bauform der Radbremsscheibe einen kleineren Durchmesser aufweisen als die vorgesehenen Befestigungslöcher am Radsteg eines Schienenrades, dann können in die Befestigungslöcher der ersten Gruppe Spannbuchsen eingesetzt werden.

Mit der vorliegenden Erfindung ist es möglich, am selben Schienenrad Radbremsscheiben von zwei oder mehreren Herstellern zu montieren, wobei dann eine behördliche Zulassung für nur dieses eine Schienenrad erforderlich ist. Für den Bahnbetreiber wird die Verfügbarkeit von Ersatzteilen erhöht, weil er aus den Radbremsscheiben mehrerer Hersteller wählen kann. Gleichzeitig wird für den Bahnbetreiber die Lagerhaltung von Schienenrädern vereinfacht, weil nur mehr eine Bauform auf Lager gehalten werden muss, statt wie bisher immer verschiedene Schienenräder für verschiedene Radbremsscheiben.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Fig. 1 eine schematische Darstellung der Befestigungslöcher eines Schienenrades für eine erste Bauform einer Radbremsscheibe,
Fig. 2 eine schematische Darstellung der Befestigungslöcher eines Schienenrades für eine zweite Bauform einer Radbremsscheibe,
Fig. 3 eine schematische Darstellung der Befestigungslöcher eines erfindungsgemäßen Schienenrades für die erste und die zweite Bauform einer Radbremsscheibe nach Fig. 1 bzw. 2,
Fig. 4 eine Spannbuchse zum Einsetzen in das Schienenrad aus Fig. 3.

### Ausführung der Erfindung

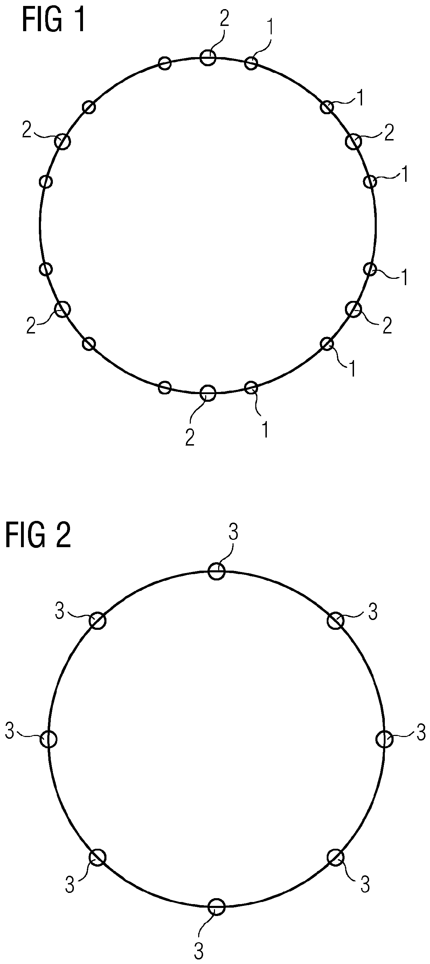

In Fig. 1 ist die räumliche Anordnung der Befestigungslöcher 1, 2 eines Schienenrades für eine erste Bauform einer Radbremsscheibe dargestellt. Die Befestigungslöcher liegen alle auf einem Kreis, hier mit einem Durchmesser von etwa 600 mm. Es sind zwölf Befestigungslöcher 1 mit einem kleineren Durchmesser vorgesehen, mit jeweils gleichem Abstand zueinander. Diese sind für die Befestigung der Radbremsscheibe am Schienenrad mittels Schrauben vorgesehen. Weiters sind sechs Befestigungslöcher 2 mit einem relativ zu den Befestigungslöchern 1 größeren Durchmesser vorgesehen, die ebenfalls jeweils gleichem Abstand zueinander aufweisen. Diese sind für die Befestigung von Radialführungen für die Radbremsscheibe vorgesehen, sodass die Radbremsscheibe entlang dieser radial verschiebbar ist und eine radiale Führung der Radbremsscheibe im Falle der erwärmungsbedingten Ausdehnung gewährleistet ist.

Die zugehörige Radbremsscheibe erster Bauform weist zwölf Bohrungen bzw. Befestigungslöcher auf, die den gleichen Durchmesser und die gleiche Lage haben wie die Befestigungslöcher 1. Sie weist darüber hinaus sechs Mittel zur Radialführungen auf, die mit den Radialführungen räumlich korrespondieren, welche in den Befestigungslöchern 2 des Schienenrades befestigt sind.

In Fig. 2 ist die räumliche Anordnung der Befestigungslöcher 3 eines Schienenrades für eine zweite Bauform einer Radbremsscheibe dargestellt. Die Befestigungslöcher liegen wieder alle auf einem Kreis, hier wieder mit einem Durchmesser von etwa 600 mm. Es sind acht Befestigungslöcher 3 vorgesehen, mit jeweils gleichem Abstand zueinander. Diese sind für die Befestigung der Radbremsscheibe am Schienenrad mittels Schrauben vorgesehen. Der Durchmesser der Befestigungslöcher 3 ist größer als jener der Befestigungslöcher 1, 2, des Schienenrades aus Fig. 1. Auch in Fig. 2 sind Radialführungen vorgesehen, die allerdings ebenfalls in den Befestigungslöchern 3 befestigt sind, z.B. in jedem zweiten Befestigungsloch 3.

Die zugehörige Radbremsscheibe zweiter Bauform weist acht Bohrungen bzw. Befestigungslöcher auf, die den gleichen Durchmesser und die gleiche Lage haben wie die Befestigungslöcher 3 des Schienenrades.

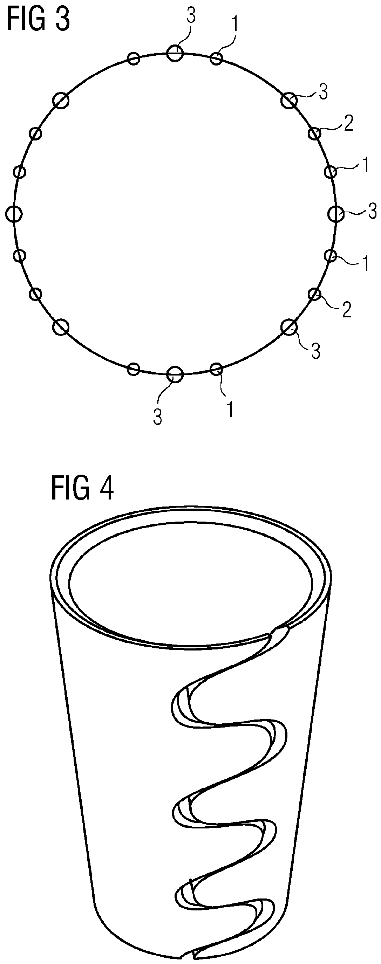

In Fig. 3 sind nun die Befestigungslöcher eines erfindungsgemäßen Schienenrades dargestellt, an welches sowohl Radbremsscheiben der ersten als auch der zweiten Bauform (nach Fig. 1 bzw. 2) montiert werden können. Es weist insgesamt zwanzig Befestigungslöcher auf, von denen sechs für beide Bauformen verwendet werden.

Das in dieser Darstellung oberste und unterste Befestigungsloch 3 ist mit dem gleichen Durchmesser wie die Befestigungslöcher 3 aus Fig. 2 ausgeführt, also mit dem größten hier vorkommenden Durchmesser. Falls eine Radbremsscheibe erster Bauform (entsprechend Fig. 1) montiert werden soll, so ist der Durchmesser entsprechend zu verkleinern, etwa mit einer Spannbuchse, wie sie in Fig. 4 dargestellt ist. Spannbuchsen, oder genauer Einspannbuchsen, sind geschlitzte Hohlzylinder mit verschiedenen Schlitzformen, und etwa aus vergütetem Bandstahl gefertigt. Grundsätzlich könnten statt Spannbuchsen auch andere Bauelemente verwendet werden. Der Außendurchmesser der Spannbuchse 4 entspricht dabei dem Innendurchmesser der Befestigungslöcher 3, der Innendurchmesser der Spannbuchse 4 entspricht dem Durchmesser der Befestigungslöcher 2.

Vier weitere Befestigungslöcher 3 in Fig. 3 sind ebenfalls entsprechend den Befestigungslöchern 3 in Fig. 2 ausgeführt, also mit dem größten Durchmesser. Sie finden entweder für die Radbremsscheibe zweiter Bauform nach Fig. 2 Anwendung oder für die Radbremsscheibe erster Bauform nach Fig. 1, nämlich für die an der gleichen Stelle dort vorgesehenen Befestigungslöcher 1. Da die Befestigungslöcher 1 für die erste Bauform der Radbremsscheibe jedoch einen geringeren Durchmesser benötigen, müssen auch hier bei Montage von Bremsscheiben der ersten Bauform Spannhülsen 4 in diese vier Befestigungslöcher 3 eingesetzt werden. Der Außendurchmesser der Spannbuchse 4 entspricht dabei dem Innendurchmesser der Befestigungslöcher 3, der Innendurchmesser der Spannbuchse 4 entspricht dem Durchmesser der Befestigungslöcher 1.

Wenn Radbremsscheiben der zweiten Bauform, also entsprechend Fig. 2, montiert werden, sind keine Anpassungen der Befestigungslöcher 1, 2, 3 in Fig. 3 notwendig.

### Bezugszeichenliste:

- 1: kleineres Befestigungsloch für erste Bauform
- 2: größeres Befestigungsloch für erste Bauform
- 3: Befestigungsloch für zweite Bauform
- 4: Spannbuchse

## Patentansprüche

1. Schienenradsystem mit einer Vielzahl von über den Radumfang verteilten, am Radsteg vorgesehenen Befestigungslöchern (1, 2, 3) zur Befestigung von Radbremsscheiben mit einer vorgegebenen Verteilung von korrespondierenden Befestigungslöchern, wobei am Radsteg Befestigungslöcher (1, 2, 3) für zumindest zwei unterschiedliche Bauformen von Radbremsscheiben vorgesehen sind, **dadurch gekennzeichnet, dass** am Schienenradsystem erste Befestigungslöcher (1) für eine Befestigung einer Radbremsscheibe einer ersten Bauform am Schienenrad mittels Schrauben vorgesehen sind, zweite Befestigungslöcher (2) für eine Befestigung von Radialführungen für die Radbremsscheibe der ersten Bauform vorgesehen sind, sowie dritte Befestigungslöcher (3) für eine Befestigung einer Radbremsscheibe einer zweiten Bauform am Schienenrad mittels Schrauben und von Radialführungen vorgesehen sind, wobei der Durchmesser der dritten Befestigungslöcher (3) größer ist als jener der ersten und zweiten Befestigungslöcher (1, 2) und der Durchmesser der zweiten Befestigungslöcher (2) größer ist als jener der ersten Befestigungslöcher (1) und alle Befestigungslöcher (1, 2, 3) auf einem Kreis liegen, wobei, falls eine Radbremsscheibe erster Bauform montiert werden soll, die dritten Befestigungslöcher (3) mit Spannbuchsen (4) verkleinert werden, wobei Außendurchmesser der Spannbuchsen (4) dem Innendurchmesser der dritten Befestigungslöcher (3) entsprechen und Innendurchmesser der Spannbuchsen (4) teilweise dem Durchmesser der ersten Befestigungslöcher (1) und teilweise dem Durchmesser der zweiten Befestigungslöcher (2) entsprechen.

2. Schienenradsystem nach Anspruch 1, **dadurch gekennzeichnet, dass** eine erste Gruppe von dritten Befestigungslöchern (3) für zumindest zwei unterschiedliche Bauformen von Radbremsscheiben und eine zweite Gruppe von ersten und zweiten Befestigungslöchern (1, 2) nur für eine Bauform einer Radbremsscheibe verwendbar ist.

3. Schienenradsystem nach Anspruch 2, **dadurch gekennzeichnet, dass** eine dritte Gruppe von Befestigungslöchern vorgesehen ist, die nur für eine weitere Bauform einer Radbremsscheibe verwendbar ist.

4. Schienenradsystem nach einem der Ansprüche 1 bis 3, **dadurch gekennzeichnet, dass** die Befestigungslöcher (1, 2, 3) am Radsteg für unterschiedliche Bauformen von Radbremsscheiben zumindest eine unterschiedliche Verteilung in Umfangsrichtung aufweisen.

5. Schienenradsystem nach einem der Ansprüche 1 bis 3, **dadurch gekennzeichnet, dass** eine bzw. die erste Gruppe von dritten Befestigungslöchern (3) für Bauformen von Radbremsscheiben mit unterschiedlichen Durchmessern der Befestigungslöcher verwendbar ist, indem bei einer notwendigen Verringerung des Innendurchmessers der Befestigungslöcher der ersten Gruppe Spannbuchsen (4) in die dritten Befestigungslöcher (3) des Radstegs eingesetzt sind.

6. Schienenradsystem nach einem der Ansprüche 1 bis 5, an welchem mittels Befestigungsmitteln, die in die Befestigungslöcher (1, 2, 3) des Schienenrads eingreifen, zumindest eine Radbremsscheibe befestigt ist, **dadurch gekennzeichnet, dass** ein oder mehrere am Radsteg des Schienenrades vorgesehene erste und zweite Befestigungslöcher (1, 2) frei von Befestigungsmitteln sind.

7. Schienenradsystem nach Anspruch 6, **dadurch gekennzeichnet, dass** die Befestigungsmittel Schrauben sind.

8. Verfahren zur Anpassung eines Schienenradsystems nach einem der Ansprüche 1 bis 7 an unterschiedliche Bauformen von Radbremsscheiben, **dadurch gekennzeichnet, dass** am Radsteg Befestigungslöcher (1, 2, 3) für zumindest zwei unterschiedliche Bauformen von Radbremsscheiben gefertigt werden.

9. Verfahren nach Anspruch 8, **dadurch gekennzeichnet, dass** die gegenseitige räumliche Anordnung einer ersten Gruppe von dritten Befestigungslöchern (3) der räumlichen Anordnung von Befestigungslöchern auf zumindest zwei unterschiedlichen Bauformen von Radbremsscheiben entsprechend ausgeführt wird und eine zweite Gruppe von ersten und zweiten Befestigungslöchern (1, 2) nur der räumlichen Anordnung von Befestigungslöchern für eine Bauform einer Radbremsscheibe entsprechend ausgeführt wird.

10. Verfahren nach Anspruch 8 oder 9, **dadurch gekennzeichnet, dass** in die dritten Befestigungslöcher (3) der ersten Gruppe Spannbuchsen (4) eingesetzt werden, wenn die Befestigungslöcher der verwendeten Bauform der Radbremsscheibe einen kleineren Durchmesser aufweisen.

## Claims

1. Rail wheel system with a large number of fastening holes (1, 2, 3) that are distributed over the wheel circumference and provided on the wheel web for fastening wheel brake disks with a predetermined distribution of corresponding fastening holes, wherein fastening holes (1, 2, 3) for at least two different designs of wheel brake disks are provided on the wheel web, **characterised in that** first fastening holes (1) are provided on the rail wheel system for fastening a wheel brake disk of a first design to the rail wheel by means of screws, second fastening holes (2) are provided for fastening radial guides for the wheel brake disk of the first design, and third fastening holes (3) are provided for fastening a wheel brake disk of a second design to the rail wheel by means of screws and radial guides, wherein the diameter of the third fastening holes (3) is greater than that of the first and second fastening holes (1, 2) and the diameter of the second fastening holes (2) is greater than that of the first fastening holes (1) and all fastening holes (1, 2, 3) lie on a circle, wherein, if a wheel brake disk of a first design is to be mounted, the third fastening holes (3) are made smaller using clamping bushings (4), wherein external diameters of the clamping bushings (4) correspond to the internal diameter of the third fastening holes (3) and internal diameters of the clamping bushings (4) correspond partially to the diameter of the first fastening holes (1) and partially to the diameter of the second fastening holes (2) .

2. Rail wheel system according to claim 1, **characterised in that** a first group of third fastening holes (3) can be used for at least two different designs of wheel brake disks and a second group of first and second fastening holes (1, 2) can only be used for one design of a wheel brake disk.

3. Rail wheel system according to claim 2, **characterised in that** a third group of fastening holes is provided, which can only be used for a further design of a wheel brake disk.

4. Rail wheel system according to one of claims 1 to 3, **characterised in that** the fastening holes (1, 2, 3) on the wheel web have at least one different distribution in the circumferential direction for different designs of wheel brake disks.

5. Rail wheel system according to one of claims 1 to 3, **characterised in that** a or the first group of third fastening holes (3) can be used for designs of wheel brake disks with different diameters of the fastening holes, by clamping bushings (4) being introduced into the third fastening holes (3) of the wheel web when it is necessary to reduce the internal diameter of the fastening holes of the first group.

6. Rail wheel system according to one of claims 1 to 5, to which at least one wheel brake disk is fastened by means of fastening means, which engage into the fastening holes (1, 2, 3) of the rail wheel, **characterised in that** one or more first and second fastening holes (1, 2) provided on the wheel web of the rail wheel are free of fastening means.

7. Rail wheel system according to claim 6, **characterised in that** the fastening means are screws.

8. Method for adapting a rail wheel system according to one of claims 1 to 7 to different designs of wheel brake disks, **characterised in that** fastening holes (1, 2, 3) for at least two different designs of wheel brake disks are manufactured on the wheel web.

9. Method according to claim 8, **characterised in that** the opposing spatial arrangement of a first group of third fastening holes (3) is implemented in a corresponding manner to the spatial arrangement of fastening holes on at least two different designs of wheel brake disks, and a second group of first and second fastening holes (1, 2) is only implemented in a corresponding manner to the spatial arrangement of fastening holes for one design of a wheel brake disk.

10. Method according to claim 8 or 9, **characterised in that** clamping bushings (4) are introduced into the third fastening holes (3) of the first group, if the fastening holes of the used design of the wheel brake disk have a smaller diameter.

## Revendications

1. Système de roue ferroviaire comportant une pluralité de trous de fixations (1, 2, 3) répartis sur la circonférence de la roue et prévus sur le voile de roue pour la fixation de disques de frein de roue avec une répartition prédéfinie de trous de fixation correspondants, dans lequel des trous de fixation (1, 2, 3) sont prévus sur le voile de roue pour au moins deux modèles différents de disques de frein de roue, **caractérisé en ce que** des premiers trous de fixation (1) sont prévus sur le système de roue ferroviaire pour fixer un disque de frein de roue d'un premier modèle à la roue ferroviaire à l'aide de vis, des deuxièmes trous de fixation (2) sont prévus pour fixer des guides radiaux pour le disque de frein de roue du premier modèle, et des troisièmes trous de fixation (3) sont prévus pour fixer un disque de frein de roue d'un second modèle à la roue ferroviaire à l'aide de vis et de guides radiaux, dans lequel le diamètre des troisièmes trous de fixation (3) est supérieur à celui des premiers et deuxièmes trous de fixation (1, 2) et le diamètre des deuxièmes trous de fixation (2) est supérieur à celui des premiers trous de fixation (1) et tous les trous de fixation (1, 2, 3) reposent sur un cercle, dans lequel, si un disque de frein de roue du premier modèle doit être monté, les troisièmes trous de fixation (3) sont réduits avec des douilles de serrage (4), dans lequel le diamètre extérieur des douilles de serrage (4) correspondent au diamètre intérieur des troisièmes trous de fixation (3) et le diamètre intérieur des douilles de serrage (4) correspondent en partie au diamètre des premiers trous de fixation (1) et en partie au diamètre des deuxièmes trous de fixation (2).

2. Système de roue ferroviaire selon la revendication 1, **caractérisé en ce qu'**un premier groupe de troisièmes trous de fixation (3) peut être utilisé pour au moins deux modèles différents de disques de frein de roue et un deuxième groupe de premiers et deuxièmes trous de fixation (1, 2) peut être utilisé pour un seul modèle de disque de frein de roue.

3. Système de roue ferroviaire selon la revendication 2, **caractérisé en ce qu'**un troisième groupe de trous de fixation est prévu, lequel ne peut être utilisé que pour un autre modèle de disque de frein de roue.

4. Système de roue ferroviaire selon l'une des revendications 1 à 3, **caractérisé en ce que** les trous de fixation (1, 2, 3) sur le voile de roue pour différents modèles de disques de frein de roue présentent au moins une répartition différente dans le sens circonférentiel.

5. Système de roue ferroviaire selon l'une des revendications 1 à 3, **caractérisé en ce que** l'un ou le premier groupe de troisièmes trous de fixation (3) peut être utilisé pour des modèles de disques de frein de roue avec différents diamètres de trous de fixation, **en ce que** des douilles de serrage (4) sont insérées dans les troisièmes trous de fixation (3) du voile de roue lorsque le diamètre intérieur des trous de fixation du premier groupe doit être réduit.

6. Système de roue ferroviaire selon l'une des revendications 1 à 5, sur lequel au moins un disque de frein de roue est fixé à l'aide de moyens de fixation qui s'engagent dans les trous de fixation (1, 2, 3) de la roue ferroviaire, **caractérisé en ce qu'**un ou plusieurs premier et deuxième trous de fixation (1, 2) prévus sur le voile de la roue ferroviaire sont exempts de moyens de fixations.

7. Système de roue ferroviaire selon la revendication 6, **caractérisé en ce que** les moyens de fixation sont des vis.

8. Procédé d'adaptation d'un système de roue ferroviaire selon l'une des revendications 1 à 7 à différents modèles de disques de frein de roue, **caractérisé en ce que** des trous de fixation (1, 2, 3) sont pratiqués sur le voile de roue pour au moins deux modèles différents de disques de frein de roue.

9. Procédé selon la revendication 8, **caractérisé en ce que** l'agencement spatial mutuel d'un premier groupe de troisièmes trous de fixation (3) est réalisé conformément à l'agencement spatial des trous de fixation sur au moins deux modèles différents de disques de frein de roue et un deuxième groupe des premier et deuxième trous de fixation (1, 2) n'est réalisé que conformément à l'agencement spatial de trous de fixation pour un modèle d'un disque de frein de roue.

10. Procédé selon la revendication 8 ou 9, **caractérisé en ce que** des douilles de serrage (4) sont insérées dans les troisièmes trous de fixation (3) du premier groupe si les trous de fixation du modèle de disque de frein de roue utilisé ont un diamètre inférieur.
